# EUROPÄISCHE PATENTSCHRIFT

(11) **EP 1 068 917 B1**
(45) Veröffentlichungstag und Bekanntmachung des Hinweises auf die Patenterteilung: **18.01.2006**
(21) Anmeldenummer: 00114812.1
(22) Anmeldetag: 11.07.2000
(51) Int. Cl.: B23B 5/18, B23C 3/06, B24B 5/42, B23Q 9/00, B23Q 9/02

(54) **Vorrichtung und Verfahren zur Bearbeitung von Kurbelzapfen**
Device and method for machining crankpins
Dispositif et methode d' usinage de manetons de vilebrequins

(30) Priorität: 14.07.1999 DE 19932410
(43) Veröffentlichungstag der Anmeldung: 17.01.2001
(73) Patentinhaber: Man B&W Diesel Aktiengesellschaft, 86153 Augsburg (DE)
(72) Erfinder: Stobbe, Detlev, 22393 Hamburg (DE); Wriedt, Bernhard, 23843 Travenbrück (DE)
(74) Vertreter: Schober, Stefan

(56) Entgegenhaltungen:
- DE-C- 3 434 140
- DE-U- 7 709 500
- US-A- 2 698 505
- US-A- 2 818 685

## Beschreibung

Die Erfindung betrifft eine mobile Vorrichtung zum Bearbeiten von Kurbelzapfen an Kurbelwellen gemäß dem Oberbegriff des Patentanpruchs 1 und wie z.B. aus US-A-2 818 685 bekannt, sowie ein mit dieser Vorrichtung anzuwendendes Verfahren nach den Ansprüchen 18 bis 20.

Allgemein bekannt sind Vorrichtungen, die aus zwei geteilten Drehringen bestehen, welche am Außenumfang mit einer Kettenradverzahnung versehen sind und durch Gleitschuhe aus Kunststoff an den Übergangshohlkehlen der Kurbelzapfen radial gehalten und geführt werden. Der Antrieb erfolgt durch einen druckluftgetriebenen Motor über eine Rollenkette, die um einen der Drehringe gelegt ist. Durch einschraubbare Distanzstangen wird der andere Drehring mit dem angetriebenen Drehring verbunden. Die Bearbeitung der Lauffläche erfolgt bei umlaufenden Drehringen mittels einer auf die Vorrichtung montierten Druckluftschleifmaschine, die mit einer Topfschleifscheibe bestückt ist. Die Fertigbearbeitung kann durch einen an der Vorrichtung montierten Schwingschleifer erfolgen oder manuell durch Feilen oder Schmirgeln. Danach müssen die Übergangshohlkehlen mit handgeführten, druckluftgetriebenen Radialschleifmaschinen nachgesetzt werden.

Durch die geringe Abtragsleistung beim Schleifen ist dieses Verfahren unwirtschaftlich und durch die Verschmutzung des Triebraumes mit gesundheitsschädlichem Schleifstaub ist ein großer Aufwand für Reinigungsarbeiten notwendig.

Durch die ungenaue Führung und aufgrund des mit der Bearbeitungszeit wachsenden Spiels der Gleitschuhe in den Übergangshohlkehlen muß ein großes Aufmaß vorgesehen werden, das unter hohem Zeitaufwand durch komplexe manuelle Arbeit und eingeschränkter Fertigungsqualität endbearbeitet wird.

Der Vorrichtungsaufbau sowie die Ausrichtung am Kurbelzapfen sind zeitaufwendig und aufgrund des nachgeführten und sich aufwickelnden Druckluftschlauchs ist kein kontinuierlicher Arbeitsablauf möglich, da die Drehrichtung der Vorrichtung zum Abwickeln des Schlauches regelmäßig umgesteuert werden muß.

Die DE 34 34 140 zeigt eine Vorrichtung, die an einer Halterung hängt und sich mittels Rollen bzw. Gleitschuhen am Kurbelzapfen abstützt. Die Vorrichtung wird dem umlaufenden Kurbelzapfen durch die Halterung nachgeführt und durch eine elektronische Wasserwaage stets in planparalleler Lage zum Kurbelwellenmittelzapfen gehalten. Die Bearbeitung erfolgt durch eine angetriebene Schleifwalze.

Neben den vorn beschriebenen Nachteilen des Schleifverfahrens sind bei dieser Vorrichtung Ungenauigkeiten bei der gesteuerten Parallelausrichtung zu befürchten, wenn Vibrationen bzw. Schwingungen in ihrer Umgebung auftreten, so daß beim Einsatz z. B. auf Schiffen die Fertigungsqualität eingeschränkt ist. Weiterhin werden die Hauptlagerstellen der Kurbelwelle durch den Umlauf während der Bearbeitung belastet und können beschädigt werden.

Durch das DE-GM 77 09 500 ist eine Vorrichtung bekannt geworden, die aus einem stationären teilbaren Außenring besteht, der an der Kurbelwange axial und radial einstellbar befestigt ist. In diesem Außenring ist drehbar ein transmissionsgetriebener Trägerring gelagert, der auf einer Führung einen axial verschieblichen Schlitten trägt. An diesem Schlitten ist ein Schneidstahl zur Bearbeitung des Kurbelzapfens befestigt, der durch eine Vorschubeinrichtung längs der Lauffläche verschoben wird.

Der Aufbau und die Montage dieser Vorrichtung ist sehr aufwendig und für die genaue Justierung des feststehenden Außenrings ist eine hoher Zeitaufwand erforderlich.

Aus der US-A-2,818,685 ist eine mobile Vorrichtung zur Oberflächenbearbeitung von Kurbelzapfen an Kurbelwellen mit umlaufenden Drehringen und mit in Achsrichtung des Kurbelzapfens bewegbarem Werkzeug bekannt. Die Vorrichtung wird an den zylindrischen Umfangsflächen der Kurbelwangen befestigt und die Drehringe sind in exzentrischen Lagerungsringen geführt.

Hiervon ausgehend ist es die Aufgabe der Erfindung, eine mobile Vorrichtung zur Bearbeitung von Kurbelzapfen zu schaffen, welche sich einfach und schnell montieren sowie handhaben lässt.

Diese Aufgabe wird erfindungsgemäß durch die kennzeichnenden Merkmale des Patentanspruchs 1 sowie durch ein Verfahren mit den Merkmalen der Patentansprüche 18 bis 20 gelöst.

Durch das mit der Vorrichtung angewendete Bearbeitungsverfahren werden die konstruktionsseitig vorgegebenen Maß-, Form- und Lagetoleranzen sowie die geforderten Oberflächengüten soweit erreicht, daß nur geringe manuelle Nachbearbeitungen erforderlich werden, die vom Umfang her mit den bei Neubaufertigung notwendigen vergleichbar sind.

Durch die besonders vorteilhafte einfache Montage und Handhabung der Vorrichtung wird eine beachtliche Zeitersparnis für die Bearbeitung erreicht, so daß insgesamt die Wirtschaftlichkeit der Bearbeitung gesteigert ist.

Durch die günstige Reduzierung des Spanvolumens bei der Fertigbearbeitung entfällt die Ausbringung von gesundheitsschädlichem Schleifstaub nahezu ganz.

Die besonders vorteilhafte Befestigung der Vorrichtung kann auf Bohrungen verzichten, so daß nach der Bearbeitung keine Verminderung der Festigkeit der Kurbelwelle durch Materialwegnahme oder Eigenschaftsänderungen des Werkstoffs auftritt.

Insbesondere ist eine Nacharbeit beschädigter Kurbelzapfen (z. B. mit aufgehärteten Oberflächen) auf konstruktiv zulässige Untermaßdurchmesser, an im Motor eingelagerten Kurbelwellen, möglich.

Nachstehend wird die Erfindung anhand eines schematisch dargestellten Ausführungsbeispiels näher erläutert. Es zeigen:
- Fig. 1: eine Ausführungsform der erfindungsgemäßen Vorrichtung in der Vorderansicht,
- Fig. 2 a: die Vorrichtung gemäß Fig. 1 als Seitenansicht,

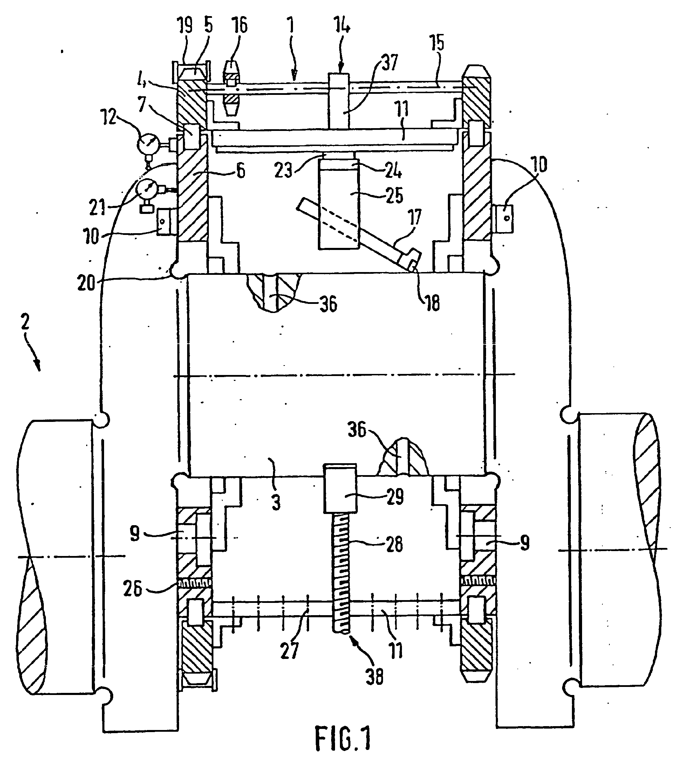

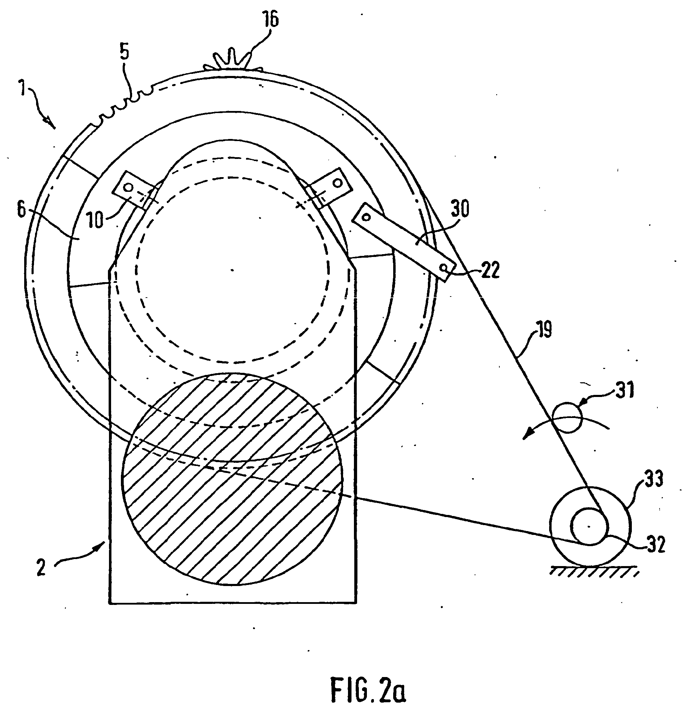

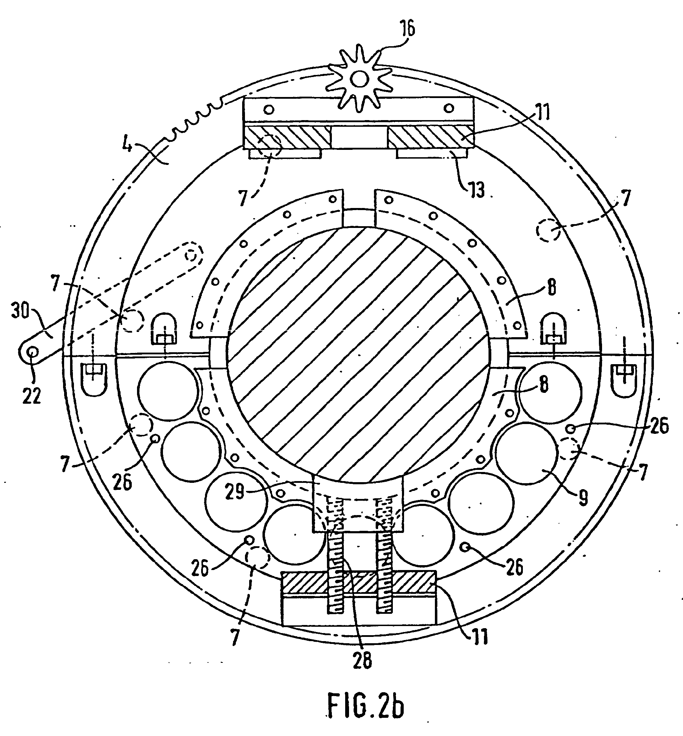

- Fig. 2 b: die Vorrichtung gemäß Fig. 1 im Schnitt durch einen Kurbelzapfen,

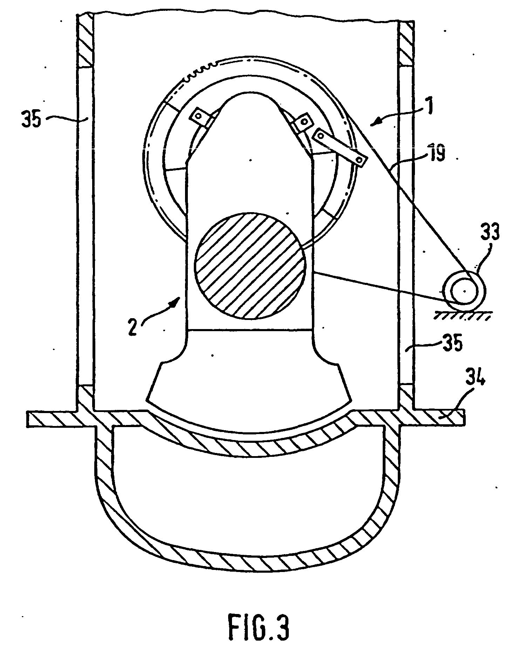

- Fig. 3: die Anwendung der Vorrichtung gemäß Fig. 1 und 2 an einer in einem Motor eingebauten Kurbelwelle

In Fig. 1 ist ein Ausschnitt einer Kurbelwelle (2) mit abgebrochen dargestellten Kurbelwellenmittenzapfen und mit einem von Kurbelwangen begrenzten Kurbelzapfen (3) gezeigt. An den Übergängen der Lauffläche des Kurbelzapfens (3) zu den Kurbelwangen sind Übergangshohlkehlen (20) angebracht.

Die Vorrichtung (1) ist mit jeweils einem geteilten Innenring (6) an den Seitenflächen der beiden Kurbelwangen befestigt, die durch Fixierungssegmente (8) konzentrisch zur Kurbelzapfenachse positioniert sind. Diese Fixierungssegmente (8) weisen an den mit der Lauffläche des Kurbelzapfens (3) in Kontakt stehenden Flächen jeweils eine konkave Rundung auf, die exakt an die Lauffläche angepaßt ist. In bevorzugter Ausführung werden an der oberen und unteren Hälfte der Innenringe (6) jeweils zwei Fixierungssegmente (8) lösbar angeschraubt. Sie werden bei Ausführung des Bearbeitungsverfahrens erst dann entfernt, wenn der durch sie bedeckte Randbereich der Lauffläche bearbeitet wird, da diese Fixierungssegmente (8) bis zu diesem Zeitpunkt zur zusätzlichen radialen Fixierung genutzt werden können. Für unterschiedliche Zapfendurchmesser müssen entsprechende Fixierungssegmente (8) mit passenden Rundungen angefertigt werden.

In einer bevorzugten Ausführung werden die Innenringe (6) mittels Hochleistungs-Rundmagneten an den inneren Seitenflächen der Kurbelwangen fixiert. Diese Magnete (9) sind in Stufenbohrungen eingebracht, welche sich auf einem Lochkreis an der unteren Hälfte der geteilten Innenringe (6) befinden und bezüglich Bohrungsdurchmesser, Anzahl und Lochkreisdurchmesser so optimiert sind, daß eine maximale Haftkraft der Magnete (9) auf die Wangenseitenflächen ausgeübt wird.

Eine weitere Befestigungsmethode der Innenringe (6) bedient sich eines Klebstoffes der zwischen den Innenringen (6) sowie den Wangenseitenflächen aufgetragen wird und dessen Haftwirkung zur Entfernung der Vorrichtung (1) durch ein chemisches Lösungsmittel aufgehoben werden kann, wodurch er rückstandsfrei entfernt werden kann.

Die orthogonale Ausrichtung der Innenringe (6) zur Kurbelwellenhauptachse bzw. die Parallelausrichtung der beiden Innenringe (6) zueinander erfolgt über mehrere Stiftschrauben (26), die in Gewindebohrungen an den Innenringen (6) eingeschraubt und an die Wangenseitenflächen angestellt werden. Damit ist eine zusätzliche Sicherung der Vorrichtung (1) gegen radiale Verschiebung bei demontierten Fixierungssegmenten (8) gegeben.

Die Lagekontrolle der beiden Innenringe (6) erfolgt über Meßuhren (12, 21). Eine radiale Verschiebung wird durch eine z. B. mit einem Magnethalter am - über die Kurbelwange - überstehenden Bereich des Innenrings (6) befestigten Meßuhr (12) angezeigt, deren Meßspitze in radialer Richtung auf die Kurbelwangenaußenseite angestellt ist. Eine axiale Positionsänderung wird durch eine weitere Meßuhr (21) überwacht, die mittels eines Magnethalters oder sonstigen Befestigungsmitteln an der Kurbelwangenaußenfläche fixiert ist und deren Meßspitze in axialer Richtung gegen den überstehenden Bereich des Innenrings (6) angestellt ist.

An den Umfangsflächen der Innenringe (6) sind mehrere überstehende Rollen (7) eingelassen, die zur spielfreien Führung von aufgesetzten Drehringen (4) dienen. Bevorzugt werden für diesen Zweck handelsübliche Rillenkugellager eingesetzt, die sowohl die Funktion einer spielfreien Wälzlagerung als auch die Führung an ihrem Außenring übernehmen. Die Rollen (7) sind ungleichmäßig geteilt am Außenumfang der Innenringe (6) angebracht, um zu vermeiden, daß die gegenüberliegenden Stöße der geteilten Drehringe (4) gleichzeitig über gegenüberliegende Rollen (7) laufen. Durch die Rollen (7) werden die Drehringe (4) sowohl in axialer als radialer Richtung spielfrei geführt.

Zwischen den Innenringen (6) und den Drehringen (4) sind nicht näher gezeigte Dichtungselemente vorgesehen, um die Rollen (7) vor Verschmutzung zu schützen.

Die beidseitig vorhandenen Drehringe (4) sind durch Distanzplatten (11) miteinander verbunden und der Antrieb für die Drehbewegung erfolgt mit einer Rollenkette (19) die über die angefräste Verzahnung (5) gelegt ist. Diese Verzahnung (5) kann sich auch auf einem mit den Drehringen (4) verpreßten zusätzlichen Ring befinden.

Die sich umfangsseitig gegenüberstehenden Distanzplatten (11) sind jeweils mit Winkelprofilen an den Drehringen (4) verschraubt.

An einer der vorzugsweise zwei Distanzplatten (11) ist eine Vorschubeinrichtung (14) montiert, die mittels einer Spindel (15) längs der Achse des Kurbelzapfens (3) verfahren wird. Die Spindel (15) ist in der bevorzugten Ausführungsform eine Gewindespindel, die an ihren beiden Enden in den Drehringen (4) drehbar, aber axial fixiert, gelagert ist. Mit geringem Abstand zu einem Drehring (4) ist auf der Spindel (15) ein sternförmiger Mitnehmer (16) angebracht, der mit einem am entsprechenden Innenring (6) befestigten Vorschubfinger (22) - einmal pro Umlauf der Drehringe (4) - kämmt, wodurch die Spindel (15) um einen verstellbaren Winkel verdreht wird. Mit der Spindel (15) wirkt eine Spindelmutter zusammen, die in ein Vorschubelement (37) eingebracht ist. Das Vorschubelement (37) ragt durch einen Durchbruch an der Distanzplatte (11), der sich über den gesamten Vorschubweg erstreckt und ist mit einer Platte (24) verbunden. Die Platte (24) ist mittels Schlitten (23) spielfrei an Linearführungen (13) geführt, die an beiden Seiten des Durchbruchs an der Distanzplatte (11) längs des Vorschubwegs befestigt sind. Die Linearführungen (13) sind vorzugsweise an der Unterseite, d. h. an der zu bearbeitenden Lauffläche hingerichteten Seite der Distanzplatte (11) angebracht. An der Platte (24) ist eine Aufnahme (25) befestigt, die ein Zustellelement (17) trägt. Die Hauptachse des Zustellelements (17) wird vorzugsweise in einem Winkel von 30° zur Drehachse des Kurbelzapfens (3) ausgerichtet. Diese Lage des Zustellelements (17) kann aber auch einen anderen Winkel zwischen etwa 0 und 90° einnehmen. Als Zustellelement (17) ist in der bevorzugten Ausführung eine handelsübliche Feinbohrpatrone vorgesehen, die Zustellfeinheiten von z. B. 0,01 mm aufweisen. Am Zustellelement (17) ist ein Schneidstoff (18) befestigt mit dem die Drehbearbeitung vorgenommen wird. Als Schneidstoffe. (18) eignen sich Wendeschneidplatten, Drehmeißel und dergleichen aus HSS (Hochleistungsschnellschnittstahl), HM (Hartmetall) oder Schneidkeramiken.

An der Aufnahme (25) kann auch eine Druckluftschleifmaschine wie sie aus dem Stand der Technik bekannt ist oder eine Fräsvorrichtung mit einem angetriebenen Fräswerkzeug wie z. B. einem Messerkopffräser angebracht werden.

Diese Schleif- bzw. Fräseinrichtungen können auch direkt an einer Distanzplatte (11) befestigt werden und müssen bei dieser Ausführung nach Fertigstellung einer Bearbeitungsbahn am Umfang der Kurbelzapfenlauffläche zur Bearbeitung einer weiteren Bahn in axialer Richtung versetzt werden. Die Befestigung dieser Einrichtungen kann auf die gleiche Art vorgenommen werden wie bei der dargestellten Schmirgeleinrichtung (38).

Die Schmirgeleinrichtung (38) besteht aus einem Formblock (29), der an der Eingriffsfläche eine konkave Form aufweist, die an die zylindrische Oberfläche des Kurbelzapfens (3) angepaßt ist. Die Eingriffsfläche ist mit Schmirgelleinen oder ähnlichen Materialien belegt wie sie für Oberflächenvergütungen üblich sind. Der Formblock (29) ist durch Gewindestangen (28) mit der Distanzplatte (11) verbunden, die in diese eingeschraubt sind. Damit kann der Anstelldruck des Formblocks (29) an die Lauffläche verstellt werden, wodurch die Materialabnahme beeinflußt wird. Für die Aufnahme der Gewindestangen sind in der dafür vorgesehenen Distanzplatte (11) Bohrungen (27) eingebracht, die sich auf Linien längs der Kurbelzapfenachse befinden und das Versetzen des Formblocks (29) auf der gesamten Breite der Lauffläche des Kurbelzapfens (3) ermöglichen.

In den Fig. 2 a und b ist die Vorrichtung (1) in Seitenansichten gezeigt. Erkennbar ist die Anordnung der Fixierungssegmente (8) an den Innenringen (6) sowie ihr Anliegen an der Lauffläche des Kurbelzapfens (3). Weiterhin sind die Fügestellen und Verschraubungen zum Verbinden der beiden Hälften der Innenringe (6) und der Drehringe (4) veranschaulicht. Mit Strichlinien, als Darstellung verdeckter Kanten, sind die Rollen (7) gezeigt, um die ungleichmäßig geteilte Anordnung der Rollen (7) am Umfang der Innenringe (6) zu verdeutlichen. Der Vorschubfinger (22) ist etwa auf der horizontalen Mittelebene der Vorrichtung (1) positioniert und kann mit der - teilweise von den Ringen (4, 6) verdeckten - am Innenring (6) befestigten Halterung (30) versetzt werden.

Die Anordnung der für die Parallelausrichtung der Innenringe (6) vorgesehenen Stiftschrauben (26) ist in dieser Ansicht ebenfalls ersichtlich.

Geschnitten dargestellt sind die mit den Drehringen (4) umlaufenden Distanzplatten (11), wobei an der oben dargestellten Distanzplatte (11) lediglich die Linearführungen (13) sowie der Durchbruch für das Vorschubelement (37) erkennbar ist. An der unten gezeigten Distanzplatte (11) ist wie auch an der oberen die Vorderansicht des Befestigungswinkels zu ersehen und die Gewindestangen (28) zur Befestigung des Formblocks (29), der mit seiner konkaven Form am Kurbelzapfen (3) anliegt.

Durch die Rollenkette (19), die die Verzahnung (5) des einen Drehrings (4) umschlingt wird die Umlaufbewegung von einem Motor (33) angetrieben. Dieser Motor ist vorzugsweise ein druckluftbetriebener Motor mit austauschbarer Übersetzung auf das Kettenritzel (32), der - zum Spannen der Rollenkette (19) - unabhängig von der Vorrichtung (1), längsverschieblich befestigt ist. Denkbar sind auch Elektromotoren oder sonstige Antriebe. Der Antrieb kann sowohl am linken oder rechten Drehring (4) -siehe Fig. 1- erfolgen oder auch durch zwei Antriebseinheiten (33, 32, 19, 5) gleichzeitig auf beide Drehringe (4).

Zur Dämpfung von etwaig auftretenden Querschwingungen an der Rollenkette (19) und/oder um sie vorzuspannen kann eine Spanneinrichtung (31), die mit Dämpfungsmitteln wirkt, vorgesehen werden.

Als besonders hervorzuhebender Vorteil ist zu erwähnen, daß die erfindungsgemäße Vorrichtung und das Verfahren an einer im Motor eingebauten Kurbelwelle anwendbar ist.

Anhand der Fig. 3 ist die Anwendung der mobilen Vorrichtung (1) an einer im Motorgestell (34) eines Verbrennungsmotors eingelagerten Kurbelwelle (2) nachvollziehbar.

In abgebrochener Darstellung ist ein Motorgestell (34) gezeigt, das am Fundament seiner Einsatzstelle, z. B. einem Schiffsrumpf oder im Maschinenraum eines Kraftwerks angebunden ist. Die Abdeckungen der Öffnungen (35), die sich längs der Zylinder in den Bereichen der Kurbelzapfen befinden, sind abgenommen.

Der Motor (33) für den Antrieb der Vorrichtung (1) ist außerhalb des Motorgestells (34) auf einem nicht gezeigten Montagebock befestigt und treibt mit der Rollenkette (19) die Vorrichtung an. Auf die Darstellung der Hauptlagerstellen der Kurbelwelle (2) und aller sonstigen für die Erfindung nicht relevanten Motorteile des Verbrennungsmotors wurde verzichtet.

Zur Bearbeitung eines Kurbelzapfens (3) werden zunächst die mit den Fixierungssegmenten (8) versehenen Hälften der Innenringe (6) am Kurbelzapfen (3) miteinander verschraubt, ausgerichtet und an der jeweiligen Wangenseitenfläche fixiert. Danach werden die Hälften der Drehringe (4) auf die Innenringe (6) aufgelegt und ebenfalls fest miteinander verschraubt. Dabei wird bereits die Spindel (15) und die Distanzplatte (11) mit der Vorschubeinheit (14) mit eingebracht, aber erst nach ihrer Ausrichtung an den bereits verschraubten Drehringen (4) fixiert. Eine weitere Distanzplatte (11) wird zunächst ohne die Schmirgeleinrichtung (38) montiert. Nach Anbringen des Antriebs (19, 32, 33, 31) kann mit dem Bearbeiten der Lauffläche des Kurbelzapfens (3) begonnen werden.

Der Schneidstoff (18) wird an einer Bohrung (36) des Kurbelzapfens (3), die zur Schmiermittelzufuhr dient, zugestellt. Dann wird die Vorrichtung (1) in Betrieb gesetzt und die Lauffläche wird von der Bohrung (36) aus in die eine axiale Richtung bis nahe an die Fixierungssegmente (8) heran bearbeitet. Danach wird die Aufnahme (25) auf der Platte (24) um 180° gewendet und die Lauffläche ausgehend von der selben Bohrung in die andere axiale Richtung analog wie oben beschrieben bearbeitet.

Zur Bearbeitung der Randbereiche der Lauffläche des Kurbelzapfens (3) werden die Fixierungssegmente (8) abgenommen und die Bearbeitung erfolgt ausgehend von einer randnahen Bohrung (36) in gleicher Weise wie oben beschrieben.

Nach der Drehbearbeitung ist noch ein Aufmaß von wenigen 1/100 Millimetern auf der Lauffläche vorhanden, das durch die Schmirgeleinrichtung (38) fertigbearbeitet wird.

Dazu wird der mit Schmirgelstoffen versehene Formblock (29) an die Lauffläche angestellt und mit der Vorrichtung (1) über die Lauffläche bewegt. Um die gesamte Lauffläche in ihrer axialen Erstreckung zu bearbeiten muß der Formblock (29) in axialer Richtung um etwa seine eigene Breite versetzt werden. Dies erfolgt anhand der Gewindestangen (28), die in die entsprechenden axial versetzt angebrachten Bohrungen (27) eingeschraubt werden. Die Bearbeitung erfolgt somit schrittweise in Bahnen.

Abschließend werden die Übergangshohlkehlen (20) auf beiden Seiten der Lauffläche nachgesetzt indem an der Aufnahme (25) bzw. am Zustellelement (17) vorzugsweise ein Formwerkzeug montiert wird. Die Bearbeitung der Übergangshohlkehlen (20) erfolgt dann durch stufenweises Zustellen des Formwerkzeugs. Das Formwerkzeug kann auch aus mehreren Formsegmenten bestehen, die an die entsprechenden Stellen der Übergangshohlkehlen (20) positioniert und zugestellt werden.

Die abschließende Fertigbearbeitung der Übergangshohlkehlen (20) erfolgt nach Demontage der Vorrichtung (1) von Hand wie es auch bei Neubauten üblich ist, können aber auch mittels einer, auf eine der Distanzplatten (11) montierten, druckluft- oder elektrischbetriebenen Schleifmaschine mit der Vorrichtung (1) bearbeitet werden.

Die Vorrichtung (1) kann zur Ausführung der Bearbeitungsverfahren sowohl an eingelagerten Kurbelwellen (2) in Reihenals auch in V-Motoren oder auch an ausgebauten Kurbelwellen (2) angebaut werden.

Für die Anwendung der Vorrichtung (1) an unterschiedlichen Kurbelwellen (2) von verschiedenen Motortypen läßt sich die Vorrichtung (1) durch Austausch der Distanzplatte (11) mit der Linearführung (13) sowie der Spindel (15), der Distanzplatte (11) mit Bohrungen (27) und der Fixierungssegmente (8) an die abweichenden Abmessungen anpassen.

### Bezugszeichenliste

- 1: Vorrichtung
- 2: Kurbelwelle
- 3: Kurbelzapfen
- 4: Drehring
- 5: Verzahnung
- 6: Innenring
- 7: Rolle
- 8: Fixierungssegment
- 9: Magnet
- 10: Abstützelement
- 11: Distanzplatte
- 12: Meßuhr
- 13: Linearführung
- 14: Vorschubeinheit
- 15: Spindel
- 16: Mitnehmer
- 17: Zustellelement
- 18: Schneidstoff
- 19: Rollenkette
- 20: Übergangshohlkehle
- 21: Meßuhr
- 22: Vorschubfinger
- 23: Schlitten
- 24: Platte
- 25: Aufnahme
- 26: Stiftschraube
- 27: Bohrung
- 28: Gewindestange
- 29: Formblock
- 30: Halterung
- 31: Spanneinrichtung
- 32: Kettenritzel
- 33: Motor
- 34: Motorgestell
- 35: Öffnung
- 36: Bohrung
- 37: Vorschubelement
- 38: Schmirgeleinrichtung

## Patentansprüche

1. Mobile Vorrichtung zur Oberflächenbearbeitung von Kurbelzapfen an Kurbelwellen mit umlaufenden Drehringen und mit in Achsrichtung des Kurbelzapfens bewegbarem Werkzeug **dadurch gekennzeichnet, daß** die umlaufenden Drehringe (4) auf Innenringen (6) geführt sind, die mittels Fixierungssegmenten (8) an der Lauffläche des Kurbelzapfens (3) radial positionierbar sind und an den Wangenseitenflächen der Kurbelzapfen (3) fixierbar sind.

2. Vorrichtung nach Anspruch 1, **dadurch gekennzeichnet, daß** die radiale Lage der Innenringe (6) gegenüber der Lauffläche des Kurbelzapfens (3) veränderbar ist.

3. Vorrichtung nach Anspruch 1, **dadurch gekennzeichnet, daß** die Fixierungssegmente (8) abnehmbar sind.

4. Vorrichtung nach Anspruch 1, **dadurch gekennzeichnet, daß** die Innenringe (6) mittels Magneten (9) an den Wangenseitenflächen der Kurbelzapfen (3) fixierbar sind.

5. Vorrichtung nach Anspruch 1, **dadurch gekennzeichnet, daß** die Innenringe (6) mittels eines chemisch lösbaren Klebstoffes an den Wangenseitenflächen der Kurbelzapfen (3) fixierbar sind.

6. Vorrichtung nach Anspruch 1, **dadurch gekennzeichnet, daß** die Innenringe (6) durch Abstützelemente (10) an der Kurbelwangenaußenkontur befestigt sind.

7. Vorrichtung nach Anspruch 1, **dadurch gekennzeichnet, daß** die Innenringe (6) mit gegen die Kurbelwangenseitenflächen angestellten Stiftschrauben (26) parallel zueinander ausrichtbar sind.

8. Vorrichtung nach Anspruch 1, **dadurch gekennzeichnet, daß** die Drehringe (4) mittels Distanzplatten (11) zueinander fixierbar sind.

9. Vorrichtung nach Anspruch 8, **dadurch gekennzeichnet, daß** an mindestens einer der Distanzplatten (11) eine Vorschubeinheit (14) vorgesehen ist, die das Werkzeug (18) mittels einer Spindel (15), die mit jeder vollen Umdrehung der Drehringe (4) durch einen feststehenden Vorschubfinger (22) um einen einstellbaren Winkel weitergedreht wird, axial verschiebt.

10. Vorrichtung nach Anspruch 1, **dadurch gekennzeichnet, daß** die axiale und radiale Position der Innenringe (6) während dem Betrieb der Vorrichtung durch Meßuhren (12, 21) überprüfbar ist.

11. Vorrichtung nach Anspruch 1, **dadurch gekennzeichnet, daß** als bewegbares Werkzeug ein Schneidstoff (18) zur Drehbearbeitung angebracht sind.

12. Vorrichtung nach Anspruch 11, **dadurch gekennzeichnet, daß** als Zustellelement (17) für den Schneidstoff (18) eine Feinbohrpatrone vorgesehen ist, deren Hauptachse in einem Winkel zwischen etwa 0 und 90° zur Drehachse des Kurbelzapfens (3) steht.

13. Vorrichtung nach Anspruch 1, **dadurch gekennzeichnet, daß** an einer Distanzplatte (11) eine angetriebene Schleifmaschine angebracht ist.

14. Vorrichtung nach Anspruch 8, **dadurch gekennzeichnet, daß** an mindestens einer der Distanzplatten (11) eine in axialer Richtung versetzbare Fräsvorrichtung zum Drehfräsen vorgesehen ist.

15. Vorrichtung nach Anspruch 8, **dadurch gekennzeichnet, daß** an mindestens einer der Distanzplatten (11) eine, in axialer Richtung versetzbare, Schmirgeleinrichtung (38) vorgesehen ist.

16. Vorrichtung nach Anspruch 1, **dadurch gekennzeichnet, daß** die Drehringe (4) mittels einer durch eine Spanneinrichtung (31) vorspannbare Rollenkette (19) von einem Pneumatik- oder Elektromotor (33) antreibbar sind.

17. Vorrichtung nach Anspruch 1, **dadurch gekennzeichnet, daß** die.Drehringe (4) durch wälzgelagerte Rollen (7), die am Umfang der Innenringe (6) ungleichmäßig geteilt angebracht sind, geführt werden.

18. Verfahren zum Bearbeiten von Kurbelzapfen (3) unter Anwendung der Vorrichtung nach einem der vorangegangenen Ansprüche, **dadurch gekennzeichnet, daß** die Lauffläche des Kurbelzapfens (3) und Übergangshohlkehlen (20) mit Aufmaß vorgedreht werden, wobei die Fixierungssegmente (8) zur Bearbeitung der Randbereiche der Lauffläche abgenommen werden und danach die Lauffläche unter Verwendung der Vorrichtung durch Formschmirgeln fertigbearbeitet wird und abschließend die Übergangshohlkehlen (20) fertigbearbeitet werden.

19. Verfahren nach Anspruch 18, **dadurch gekennzeichnet, daß** die Übergangshohlkehlen (20) nach Demontage der Vorrichtung (1) manuell fertigbearbeitet werden.

20. Verfahren nach Anspruch 18, **dadurch gekennzeichnet, daß** die Übergangshohlkehlen (20) durch eine Schleifmaschine mit der Vorrichtung (1) fertigbearbeitet werden.

21. Verfahren nach Anspruch 18, **dadurch gekennzeichnet, daß** zur Drehbearbeitung ein angetriebenes Fräswerkzeug eingesetzt wird.

22. Verfahren nach einem der Ansprüche 18 bis 21, **dadurch gekennzeichnet, daß** das Verfahren im Motor bei eingebauter Kurbelwelle durchgeführt wird.

## Claims

1. Mobile device for surface-working crank pins on crankshafts having rotating turning rings and having a tool that can be moved in the axial direction of the crank pin, **characterised in that** the rotating turning rings (4) are guided on inner rings (6), which by means of fixing segments (8) can be radially positioned on the running face of the crank pin (3) and can be fixed on the web side faces of the crank pins (3).

2. Device according to claim 1, **characterised in that** the radial position of the inner rings (6) can be changed in relation to the running face of the crank pin (3).

3. Device according to claim 1, **characterised in that** the fixing segments (8) can be removed.

4. Device according to claim 1, **characterised in that** the inner rings (6) can be fixed on the web side faces of the crank pins (3) by means of magnets (9).

5. Device according to claim 1, **characterised in that** the inner rings (6) can be fixed on the web side faces of the crank pins (3) by means of a chemically soluble adhesive.

6. Device according to claim 1, **characterised in that** the inner rings (6) are secured on the crank-web outer contour by means of abutment elements (10).

7. Device according to claim 1, **characterised in that** the inner rings (6) can be aligned parallel to each other by means of stud screws (26) that are set against the crank-web side faces.

8. Device according to claim 1, **characterised in that** the turning rings (4) can be fixed in relation to each other by means of spacer plates (11).

9. Device according to claim 8, **characterised in that** on at least one of the spacer plates (11) there is provided an advancing unit (14) that axially displaces the tool (18) by means of a spindle (15) that is turned on by an adjustable angle with each full revolution of the turning rings (4) by means of a fixed advancing finger (22).

10. Device according to claim 1, **characterised in that** the axial and radial position of the inner rings (6) can be monitored by means of dial gauges (12, 21) during the operation of the device.

11. Device according to claim 1, **characterised in that** a cutting material (18) is applied as the movable tool for turning operation purposes.

12. Device according to claim 11, **characterised in that** a fine-bore cartridge, whose main axis lies at an angle between approximately 0 and 90° in relation to the rotational axis of the crank pin (3), is provided as a delivery element (17) for the cutting material (18).

13. Device according to claim 1, **characterised in that** a driven grinding machine is fitted on one spacer plate (11).

14. Device according to claim 8, **characterised in that** a milling device for rotational milling that can be displaced in the axial direction is provided on at least one of the spacer plates (11).

15. Device according to claim 8, **characterised in that** an abrasive device (38) that can be displaced in the axial direction is provided on at least one of the spacer plates (11).

16. Device according to claim 1, **characterised in that** the turning rings (4) can be driven by a pneumatic or electric motor (33) by means of a roller chain (19) that can be pretensioned by means of a tensioning device (31).

17. Device according to claim 1, **characterised in that** the turning rings (4) are guided by rollers (7) that are mounted in rolling bearings and are provided on the circumference of the inner rings (6) in an unevenly distributed manner.

18. Method for working crank pins (3) using the device according to one of the preceding claims, **characterised in that** the running face of the crank pin (3) and transitional fillets (20) are rough-turned with an oversize, wherein the fixing segments (8) are removed to work the marginal regions of the running face and then the running face is finished using the device by precision-grinding with abrasive and finally the transitional fillets (20) are finished.

19. Method according to claim 18, **characterised in that** the transitional fillets (20) are finished manually after the device (1) has been dismantled.

20. Method according to claim 18, **characterised in that** the transitional fillets (20) are finished with the device (1) by means of a grinding machine.

21. Method according to claim 18, **characterised in that** a driven milling tool is used for the turning operation.

22. Method according to one of claims 18 to 21, **characterised in that** the method is carried out in the motor with the crankshaft installed.

## Revendications

1. Dispositif mobile pour l'usinage de surface de manetons de vilebrequins au moyen de bagues de roulement circonférentielles et d'un outil mobile dans le sens axial du maneton de vilebrequin,
**caractérisé en ce que**
les bagues de roulement circonférentielles (4) sont guidées sur des bagues intérieures (6) positionnables radialement sur la surface de roulement du maneton de vilebrequin (3) au moyen de segments de fixation (8) et qui peuvent être fixés sur les surfaces latérales de flasques des manetons de vilebrequin (3).

2. Dispositif selon la revendication 1,
**caractérisé en ce que**
la position radiale des bagues intérieures (6) est modifiable par rapport à la surface de roulement du maneton de vilebrequin (3).

3. Dispositif selon la revendication 1,
**caractérisé en ce que**
les segments de fixation (8) sont amovibles.

4. Dispositif selon la revendication 1,
**caractérisé en ce que**
les bagues intérieures (6) peuvent être fixées sur les surfaces latérales des flasques des manetons de vilebrequin (3) au moyen d'aimants (9).

5. Dispositif selon la revendication 1,
**caractérisé en ce que**
les bagues intérieures (6) peuvent être fixées sur les surfaces latérales des flasques des manetons de vilebrequin (3) au moyen d'un adhésif chimiquement soluble.

6. Dispositif selon la revendication 1,
**caractérisé en ce que**
les bagues intérieures (6) sont fixées sur le contour extérieur de flasque de vilebrequin au moyen d'éléments d'appui (10).

7. Dispositif selon la revendication 1,
**caractérisé en ce que**
les bagues intérieures (6) sont orientables parallèlement l'une par rapport à l'autre au moyen de goujons filetés (26) appuyés contre les surfaces latérales du flasque du vilebrequin.

8. Dispositif selon la revendication 1,
**caractérisé en ce que**
les bagues de roulement (4) peuvent être fixées l'une par rapport à l'autre par des plaques d'écartement (11).

9. Dispositif selon la revendication 8,
**caractérisé en ce qu'**
une unité d'avance (14) prévue sur au moins l'une des plaques d'écartement (11), déplace axialement l'outil (18) au moyen d'une broche (15) qui est tournée d'un angle réglable, lors de chaque rotation complète des bagues de roulement (4) par un doigt d'avance (22) fixe.

10. Dispositif selon la revendication 1,
**caractérisé en ce que**
la position axiale et radiale des bagues intérieures (6) peut être vérifiée par des comparateurs (12, 21) pendant le fonctionnement du dispositif.

11. Dispositif selon la revendication 1,
**caractérisé en ce qu'**
une matière de coupe (18) est appliquée comme outil mobile pour le tournage.

12. Dispositif selon la revendication 11,
**caractérisé en ce qu'**
une cartouche d'alésage-fmissage est prévue comme élément de réglage pour la matière de coupe (18), l'axe principal étant situé dans un angle compris entre 0 et 90° par rapport à l'axe de pivotement du maneton de vilebrequin (3).

13. Dispositif selon la revendication 1,
**caractérisé en ce qu'**
une meuleuse commandée est installée sur une plaque d'écartement (11).

14. Dispositif selon la revendication 8,
**caractérisé en ce qu'**
un dispositif de fraisage pouvant être décalé en sens axial est prévu pour le fraisage rotatif sur au moins l'une des plaques d'écartement (11).

15. Dispositif selon la revendication 8,
**caractérisé en ce qu'**
un dispositif à polir (38) pouvant être décalé en sens axial est prévu sur au moins l'une des plaques d'écartement (11).

16. Dispositif selon la revendication 1,
**caractérisé en ce que**
les bagues de roulement (4) peuvent être entraînées par un moteur pneumatique ou électrique (33) au moyen d'une chaîne à rouleaux (19) pouvant être précontrainte par un dispositif de serrage (31).

17. Dispositif selon la revendication 1,
**caractérisé en ce que**
les bagues de roulement (4) sont guidées par des rouleaux (7) montés sur palier à roulement, et répartis de manière irrégulière sur la circonférence des bagues intérieures (6).

18. Procédé d'usinage de manetons de vilebrequin (3) utilisant le dispositif selon l'une quelconque des revendications précédentes,
**caractérisé en ce qu'**
on dégrossit la surface de roulement du maneton de vilebrequin (3) et les gorges de passage (20) au tour, avec surépaisseur sur flanc, les segments de fixation (8) étant démontés pour l'usinage des zones de bord de la surface de roulement, et la surface de roulement est ensuite finie par polissage de forme en utilisant le dispositif, puis on finit les gorges de passage (20).

19. Procédé selon la revendication 18,
**caractérisé en ce que**
les gorges de passage (20) sont finies manuellement après le démontage du dispositif (1).

20. Procédé selon la revendication 18,
**caractérisé en ce que**
les gorges de passage (20) sont finies à l'aide du dispositif (1) au moyen d'une meuleuse.

21. Procédé selon la revendication 18,
**caractérisé en ce qu'**
l'on utilise un outil de fraisage commandé pour le tournage.

22. Procédé selon l'une des revendications 18 à 21,
**caractérisé en ce qu'**
il est réalisé dans le moteur lorsque le vilebrequin est installé.
